Europäisches Patentamt

European Patent Office

Office européen des brevets

(19)

(11) **EP 0 974 391 B1**

(12) **EUROPEAN PATENT SPECIFICATION**

(45) Date of publication and mention
of the grant of the patent:
**01.12.2004 Bulletin 2004/49**

(21) Application number: **98911152.1**

(22) Date of filing: **01.04.1998**

(51) Int Cl.[7]: **B01F 15/04**, B29C 44/00

(86) International application number:
**PCT/JP1998/001498**

(87) International publication number:
**WO 1998/043731 (08.10.1998 Gazette 1998/40)**

(54) **METHOD AND APPARATUS FOR MIXING GAS INTO HIGH-VISCOSITY MATERIAL**

VERFAHREN UND GERÄT ZUM MISCHEN EINES GASES MIT EINEM HOCHVISKOSEN
MATERIAL

PROCEDE PERMETTANT D'INCORPORER DU GAZ A UN MATERIAU A VISCOSITE ELEVEE ET
DISPOSITIF AFFERENT

(84) Designated Contracting States:
**CY DE FR GB IT**

(30) Priority: **01.04.1997 JP 8255697**
**01.04.1997 JP 8255797**

(43) Date of publication of application:
**26.01.2000 Bulletin 2000/04**

(73) Proprietors:
• **Sunstar Giken Kabushiki Kaisha**
**Takatsuki-shi, Osaka 569-0806 (JP)**
• **Uni-Sunstar B.V.**
**1077 ZX Amsterdam (NL)**

(72) Inventors:
• **OKUDA, Shinji**
**Takarazuka-shi, Hyogo 665-0883 (JP)**
• **TAKADA, Masaharu**
**Ibaraki-shi, Osaka 567-0046 (JP)**

• **YOSHIMOTO, Yasuyuki**
**Takarazuka-shi, Hyogo 665-0883 (JP)**

(74) Representative: **Shackleton, Nicola et al**
**Page White & Farrer**
**54 Doughty Street**
**London WC1N 2LS (GB)**

(56) References cited:
| | |
|---|---|
| **EP-A- 0 463 759** | **EP-A- 0 483 856** |
| **EP-A- 0 776 745** | **JP-A- 60 137 427** |
| **JP-A- 60 155 420** | **JP-A- 63 264 327** |
| **US-A- 4 067 484** | |

• **PATENT ABSTRACTS OF JAPAN vol. 018, no. 553 (C-1263), 21 October 1994 (1994-10-21) & JP 06 198152 A (TAIYO TECHNO KK), 19 July 1994 (1994-07-19)**

EP 0 974 391 B1

## Description

## TECHNICAL FIELD

The present invention relates to a method and an apparatus for mixing a high-viscosity material into a gas and a piston pump used therefor. For example, the present invention is applied to a process prior to foaming for producing a foamed-in-place gasket or a fill foam in a void.

The present invention also relates to a method and an apparatus for foaming a high-viscosity material and is applied to, for example, a foamed-in-place gasket, filling of a void, etc.

## TECHNICAL BACKGROUND

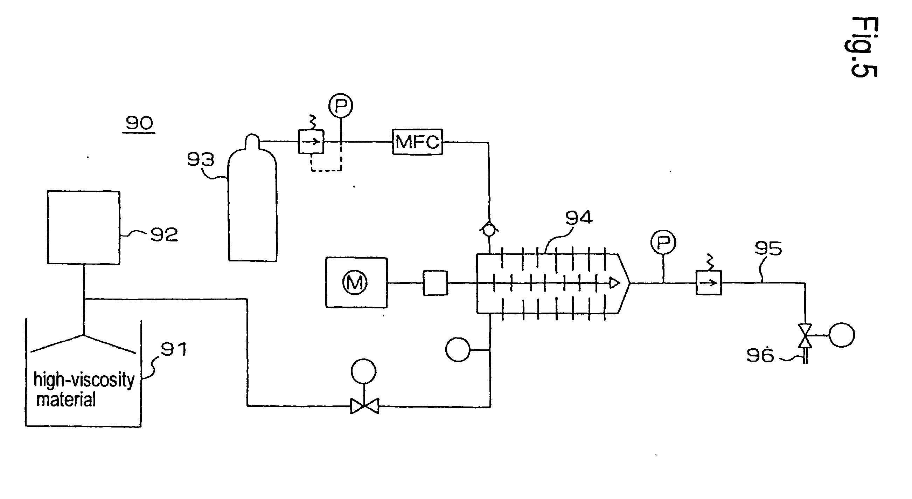

Fig. 5 is a fluid circuit diagram of a foaming apparatus 90 using a conventional mixing device.

In Fig. 5, a high-viscosity material contained in a container 91 is pressurized by a pump 92 and is transferred to a power mixer 94. A compressed gas in a gas cylinder 93 is adjusted to have a high pressure and is transferred to the power mixer 94.

The power mixer 94 is operated by rotating a motor M. The power mixer 94 mixes, under high pressure, a combination of the high-viscosity material and the gas supplied thereto to make the mixture thereof. The mixture of the high-viscosity material and the gas mixed by the power mixer 94 is discharged from a nozzle 96 through a pipe 95. As the gas, a nitrogen gas, a carbonic acid gas or air can be used. The foaming apparatus 90 arranged as mentioned above is used for, for example, applying a high-viscosity polymeric material such as a hotmelt adhesive (see Unexamined Japanese Patent Application Public Disclosure No. 63-264327).

A hotmelt adhesive comprises a thermoplastic polymer which is in a solid form at room temperature. The hotmelt adhesive is melted and fluidized by heating. When the hotmelt adhesive in a molten state is cooled to room temperature, the adhesive solidifies and exerts not only adhesive strength, but also exerts physical strength as a solid mass. In conventional foaming apparatuses for a hotmelt adhesive, a mixture of a gas and a molten hotmelt adhesive is cooled before occurrence of an escape of the gas and then, the mixture is foamed, with the gas being incorporated into the hotmelt adhesive by utilizing the strength of the adhesive which is exerted immediately after cooling.

In the above-mentioned conventional foaming apparatus 90, in order to mix the high-viscosity material and the gas, the high-viscosity material and the gas after heating must be transferred under high pressure to the power mixer 94. When the viscosity of the high-viscosity material is as high as, for example 100 PaS(100,000 cps), it is considered that the internal pressure of the power mixer 94 is 9810 KPa (100 kg/cm$^2$) or more. Therefore, in order to supply the gas and the viscous material to the power mixer 94 at the same time, the pressure of the gas needs to be higher than that of the high viscosity material.

In the conventional foaming apparatus 90, the amount of gas is measured by controlling the flow rate of the gas. However, when the pressure of the gas is high, it is difficult to control the gas flow rate. Further, a minor error in the gas flow rate under high pressure becomes a major error under atmospheric pressure. For example, an error in the flow rate of 4900 KPa (50 kg/cm$^2$)becomes 50 times greater under atmospheric pressure. Therefore, in the conventional foaming apparatus 90, there are great variations in the mixing ratio of the viscous material and the gas, so that foaming ratio cannot be stably conducted, thus making it difficult to achieve uniform foaming ratio.

Further, the high-pressure gas cylinder 93 for supplying the gas must be replaced when the compressed gas in the high-pressure gas cylinder 93 has been exhausted, so that maintenance becomes cumbersome. Further, for replacement of the high-pressure gas cylinder 93, another high-pressure gas cylinder 93 must be installed as a spare, so that a large space is required for installment of these gas cylinders. In addition, various measures must be taken from the viewpoint of safety, according to regulations for high-pressure gases. For these reasons, the conventional foaming apparatus is disadvantageous in terms of costs.

Reference should also be made to EP-A-0776 745 which describes another method for foaming a viscous material.

In view of the above, the present invention has been made. It is an object of the present invention to provide a method and an apparatus for mixing a high-viscosity material into a gas and a piston pump used therefor, which enable the gas to be mixed or introduced into the high-viscosity material under low pressure and which achieves an accurate mixing ratio of the gas and the high-viscosity material.

It is another object of the present invention to provide a method and an apparatus for foaming a high-viscosity material, which enable the gas to be introduced into the high-viscosity material under low pressure and which are free from the problems accompanying the conventional technique due to the use of a high-pressure gas cylinder and ensure easy maintenance, high safety and low costs.

## DISCLOSURE OF THE INVENTION

The present invention provides a method for mixing a high-viscosity material into a gas by using a piston pump comprising a piston and a cylinder, the piston being adapted to reciprocally move within the cylinder to effect a suction stroke and a discharge stroke, the method comprising the steps of: supplying a gas into the cylinder during and/or after the suction stroke of the piston pump; supplying a high-viscosity material into the cylinder after the suction stroke; and effecting the discharge stroke of the piston pump after completion of the supply of the high-viscosity material in the cylinder, to thereby discharge the gas and the high-viscosity material into a dispersion pipe, characterised in that a membrane gas generator is provided to which compressed air is supplied to generate the gas, the gas being supplied into the piston pump prior to supplying the high-viscosity material into the piston pump.

Preferably, the membrane gas generator generates a low-pressure gas which is supplied into the piston pump prior to supplying the high-viscosity material into the piston pump.

Preferably, the method further comprises mixing the gas and the material by the dispersion pipe to produce a mixture, and discharging the mixture to provide a high-viscosity foamed material.

Preferably, in the method of the present invention, a dead space within the cylinder becomes substantially zero at the condition of completion of the discharge stroke of the piston pump.

Preferably, in the method of the present invention, the combination of the high-viscosity material and the gas are pressurized before passing the combination in a pressurized state through the dispersing pipe, to thereby disperse the gas into the high-viscosity material to produce a mixture and further including the step of discharging the mixture which has been passed through the dispersing pipe to thereby effect foaming.

Preferably, in the method of the present invention, a mixing ratio of the gas and the high-viscosity material is controlled, based on a supply pressure ratio of the gas to the high-viscosity material supplied into the cylinder of the piston pump.

Preferably, in the method of the present invention, a mixing ratio of the gas and the high-viscosity material is controlled by means of a gas pressure and an amount of the gas supplied into the cylinder of the piston pump.

Preferably, in the method of the present invention, the supplying of the gas into the cylinder is made under a first pressure, the supplying of the high-viscosity material into the cylinder is made under a second pressure, and wherein the second pressure is higher than the first pressure.

Preferably, in the method of the present invention, the first pressure is 9.81 to 490 KPa (0.1 to 5 kg/cm$^2$).

Preferably, in the method of the present invention, the second pressure is 9810 to 29400 KPa (100 to 300 kg/cm$^2$).

Preferably, in the method of the present invention, the first pressure is 9.81 to 294 KPa (0.1 to 3 kg/cm$^2$).

Preferably, in the method of the present invention, the second pressure is 14700 to 23500 KPa (150 to 250 kg/cm$^2$).

Preferably, in the method of the present invention, a nitrogen gas is generated by the membrane gas generator and the generated nitrogen gas is used as the gas.

The present invention also provides an apparatus for providing a high-viscosity foamed material, comprising, a piston pump including a piston and a cylinder; a device for supplying a gas to the cylinder; a device for initiating supply of a high-viscosity material into the gas within the cylinder after the device has finished supplying the gas to the cylinder; a device for mixing the gas and the material placed in a discharge pipe of the piston pump to produce a mixture; and a device for discharging the mixture to provide a high-viscosity, foamed material, characterised in that the apparatus further comprises a membrane gas generator to which compressed air is supplied to generate a gas; and a pump for pumping a high-viscosity material; wherein, the piston pump is adapted to discharge a combination of the high-viscosity material pumped from the pump and the gas supplied from the membrane gas generator; and a pressurizing pump is provided for pressurizing the combination of the high-viscosity material and the gas discharged from the piston pump, and a dispersing pipe is provided for passing the combination in a pressurized state therethrough to disperse the gas into the high-viscosity material to produce a mixture.

Preferably, in the apparatus of the present invention, the device for mixing is for mixing the gas and material to produce a mixture by spreading the gas into the high-viscosity material.

Preferably, in the apparatus of the present invention, said gas supplying device and said high-viscosity material supplying device comprise valves controlling the supply of gas and high-viscosity material to said cylinder.

Preferably, in the apparatus of the present invention, the piston is adapted to reciprocally move within the cylinder to effect a suction stroke and a discharge stroke; the gas supplying device is for supplying a gas into the cylinder under a predetermined pressure; the high-viscosity material supplying device is for supplying a high-viscosity material into the cylinder under a predetermined pressure; and wherein there is also provided, a control device for effecting control of the devices for supplying, mixing and discharging.

Preferably, in the apparatus of the present invention, first, second and third needle valves are provided in the cylinder of the piston pump, the second needle valve being provided at a stroke end of the discharge stroke and adapted to control supply of the gas, the third needle valve being provided at a stroke end of the suction stroke and adapted to control supply of the high-viscosity material, the first needle valve being provided at a stroke end of the discharge stroke and adapted to control discharge of the gas and the high-viscosity material and wherein a dead space within the cylinder becomes substantially zero at the condition of the completion of the discharge stroke of the piston pump.

Preferably, in the apparatus of the present invention, the dispersing pipe is a tubular conduit.

Preferably in the apparatus of the present invention, the gas supplying device is adapted to introduce gas into the piston pump at a pressure of 9.81 to 490 KPa (0.1 to 5 kg/cm$^2$).

Preferably in the apparatus of the present invention, the gas is air.

As the high-viscosity material, an adhesive, a gap-filling sealing material, a coating material, a material for a foamed-in-place gasket or a material for a fill foam in a void can be used. More specifically, the high-viscosity material may be a moisture curing material, a thermosetting material, a chemical reactive curing material or a hotmelt material. Of these, a material which hardens or solidifies immediately after foaming upon discharge is preferred in the method and apparatus of the present invention, from the viewpoint of achieving hardening or solidifying of the high-viscosity material with the gas being dispersed therein.

As the gas, a nitrogen gas, a carbon acid gas or air can be used.

As the dispersing pipe for dispersing the gas in the high-viscosity material, for example, a hose or pipe having a length as large as from several to ten-odd meters is used. Such a hose or pipe may be straight or wound in an arc or a spiral. The hose or pipe may be used as a dispersing pipe unit mounted on and supported by a frame. By passing the combination of the high-viscosity material and the gas through the dispersing pipe in a pressurized state, the gas is formed into fine bubbles by shearing force and spread or dispersed in the high-viscosity material.

The membrane gas generator supplies a low-pressure gas having a pressure adjusted in a range of about 9.81 to 490 KPa (0.1 to 5 kg/cm$^2$), preferably about 9.81 to 294 KPa (0.1 to 3 kg/cm$^2$) . The membrane gas generator separates gases in air by utilizing differences in membrane permeation velocity between the gases, thus generating a desired gas. The velocity at which a gas permeates a membrane depends on the solubility and diffusing ability of molecules of the gas with respect to the membrane. Nitrogen can be separated with high efficiency because, of the components of air, nitrogen has the lowest membrane permeation velocity. A nitrogen gas can be continuously obtained by supplying compressed air to the membrane gas generator.

Next, a mixing method of the present invention is described, with reference to the accompanying drawings.

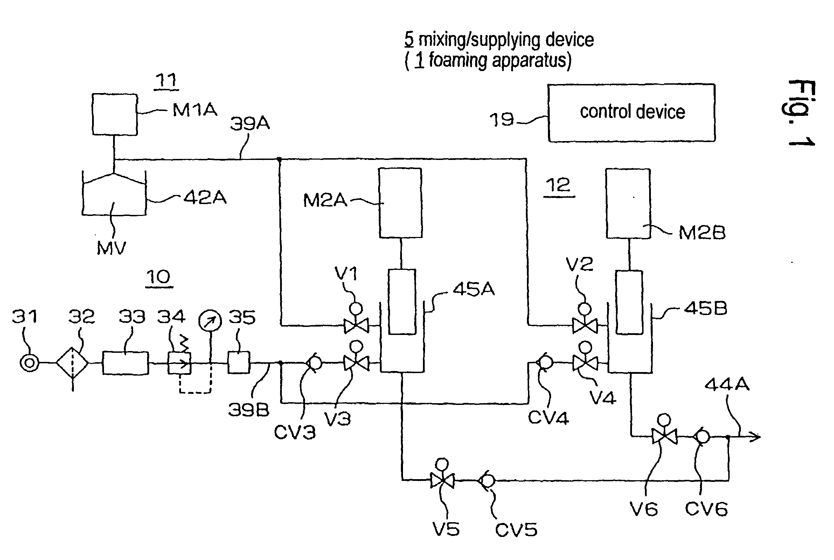

Referring to Fig. 1, compressed air is supplied into a port 31. A gas is supplied under a pressure set by a pressure regulating valve 34 from a gas supplying device 10 to a pipe 39B. On the other hand, a motor M1A is controlled, and a high-viscosity material MV is supplied under a predetermined high pressure from a high-viscosity material supplying device 11 into a pipe 39A as desired, by means of a screw pump operated by rotating the motor M1A.

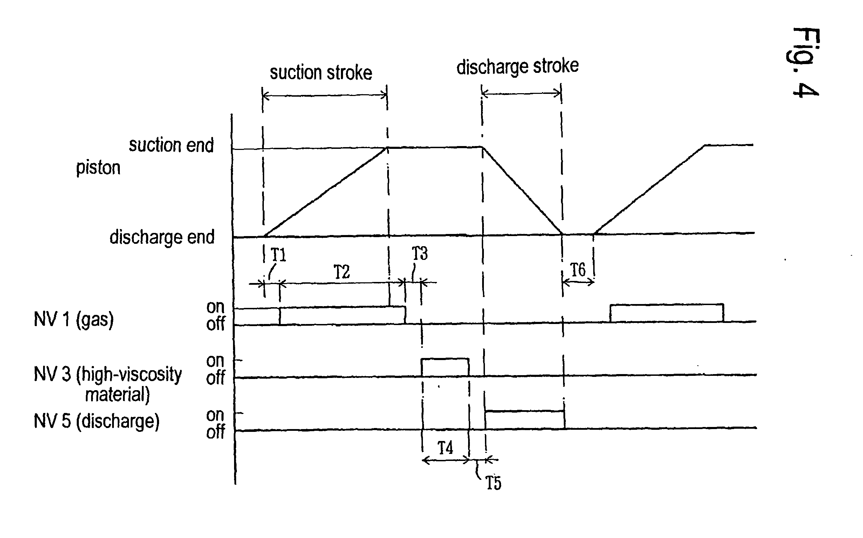

As shown in Fig. 4, a piston moves from a discharge end to a suction end of a cylinder, to thereby effect a suction stroke. During the suction stroke, when a time T1 has passed after start of the above movement of the piston, a needle valve NV1 opens, to thereby supply the gas into the cylinder. The needle valve NV1 closes after a short time after the piston has reached the suction end. Therefore, at the time of completion of the suction stroke, the cylinder is filled with the gas having the regulated pressure.

When a time T3 has passed after closing of the needle valve NV1, a needle valve NV3 opens. The needle valve NV3 is opened for a time period T4. During this period, the high-viscosity material MV is supplied from the high-viscosity material supplying device 11 into the cylinder. Due to high pressure of the high-viscosity material, the low-pressure gas, which has been supplied to the cylinder before supplying the high-viscosity material, is compressed in accordance with its pressure ratio relative to the high-viscosity material. Consequently, the volume of the gas in the cylinder becomes almost negligible.

For example, when the pressure of the gas is 98.1 KPa (1 kg/cm$^2$) and the pressure of the high-viscosity material is 19600 KPa (200 kg/cm$^2$), the volume of the gas becomes about 1/200. In this case, the high-viscosity material in an amount equal to the volume of the cylinder is mixed with the gas of 98.1 KPa (1 kg/cm$^2$) in the same volume. It should be noted that the gas of 98.1 KPa (1 kg/cm$^2$) in a volume equal to the volume of the cylinder is equivalent to the gas under atmospheric pressure (a pressure of 0 KPa (0 kg/cm$^2$) in a volume twice that of the cylinder. That is, supplying the gas of 98.1 KPa (1 kg/cm$^2$) into the cylinder is equivalent to pressurizing the cylinder to + 98.1 KPa (+ 1 kg/cm$^2$), as the pressure in the cylinder is a negative pressure of about - 98.1 KPa (- 1 kg/cm$^2$) before supplying the gas during the suction stroke. Therefore a mixing ratio R of the gas and the high-viscosity material when the volume of the gas is converted into that under atmospheric pressure is 2:1, since the gas is compressed by 1/2 relative to the volume of the cylinder. The mixing ratio R is expressed by a general formula R = (P1 + 1):1 wherein P1 indicates the supply pressure of the gas. That is, the mixing ratio R can be easily adjusted or controlled by adjusting the supply pressure P1 of the gas.

When a time T5 has passed after closing of the needle valve NV3, a needle valve NV5 opens and the piston moves from the suction end to the discharge end, to thereby effect a discharge stroke. During the discharge stroke, the needle valves NV1 and NV3 are closed. When the needle valves NV1 and NV3 are closed, forward ends of the needle valves NV1 and NV3 are flush with an inner circumferential surface of the cylinder, so that a dead space within the cylinder becomes substantially zero and therefore, all the gas and the high-viscosity material in the cylinder are discharged from an opening of the needle valve NV5. When a time T6 has passed after completion of the discharge stroke, a subsequent suction stroke is started.

When a plurality of piston pumps are provided, the piston pumps are operated in a manner such that after the discharge stroke of one piston pump has been completed, the discharge stroke of another piston pump is started. Consequently, the high-viscosity material and compressed gas, which are discharged in layers from each piston pump, are discharged continuously from the plurality of piston pumps into a pipe.

BRIEF DESCRIPTION OF THE DRAWINGS

Fig. 1 is a circuit diagram showing a part (i.e., a mixing/supplying device) of a foaming apparatus of the present invention.
Fig. 2 is a circuit diagram showing the remaining part (i.e., a pressurizing device, a dispersing device and a discharging device) of the foaming apparatus of the present invention.
Fig. 3 is a front cross-sectional view showing a structure of a piston pump.
Fig. 4 is a timing chart for explaining an operation of the piston pump.
Fig. 5 is a fluid circuit diagram of a conventional foaming apparatus for a high-viscosity material.

BEST MODE FOR CARRYING OUT THE INVENTION

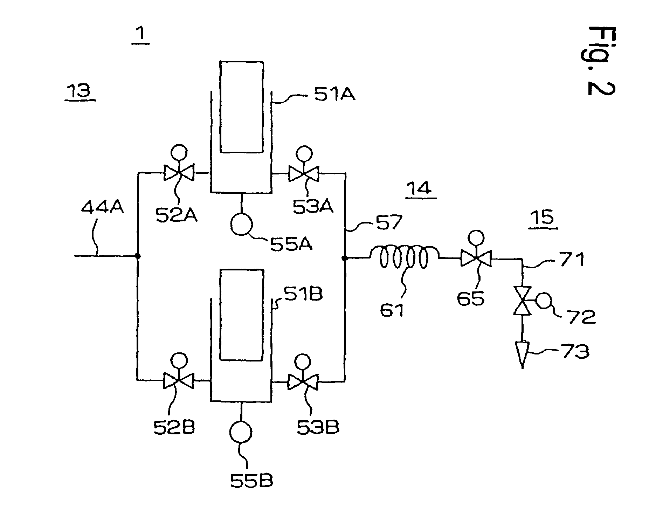

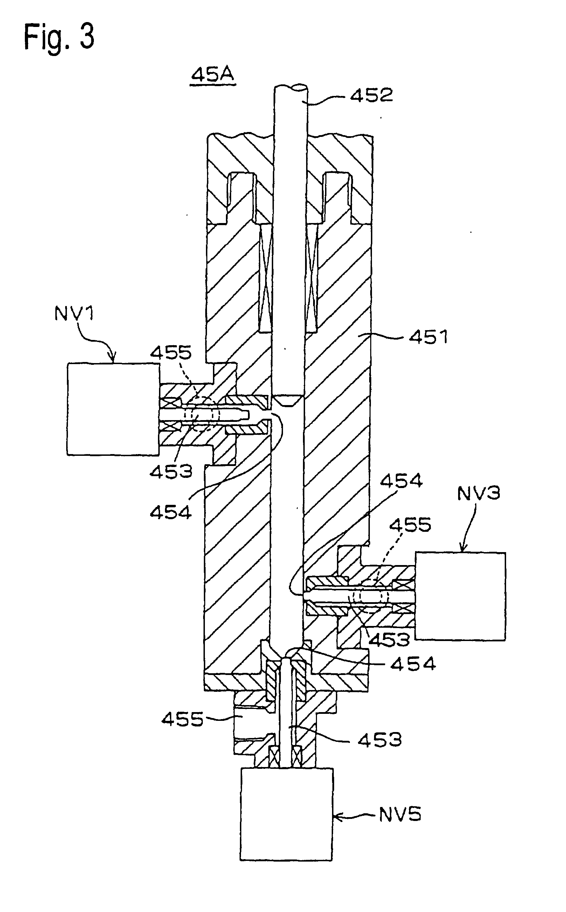

Fig. 1 is a circuit diagram showing a part of a foaming apparatus 1 of the present invention (i.e., a circuit diagram of a batch type mixing/supplying device 5 of the present invention). Fig. 2 is a circuit diagram showing the remaining part of the foaming apparatus 1 of the present invention. Fig. 3 is a front cross-sectional view showing a structure of a piston pump 45A or 45B. Fig. 4 is a timing chart for explaining an operation of the piston pump 45A or 45B.

In Figs. 1 and 2, the foaming apparatus 1 comprises: the gas supplying device 10, the high-viscosity material supplying device 11 and a gas introducing device 12 to be used in a first step in the present invention; a pressurizing device 13 to be used in a second step in the present invention; a dispersing device 14 to be used in a third step in the present invention; a discharging device 15 to be used in a fourth step in the present invention; and a control device 19 for overall control of the devices 10 to 15. The gas supplying device 10, the high-viscosity material supplying device 11, the gas introducing device 12 and the control device 19 provide a batch type introducing/supplying device, i.e., the mixing/supplying device 5; of the present invention as shown in Fig. 1. The mixing/supplying device 5 corresponds to a mixing apparatus of the present invention.

Referring to Fig. 1, the gas supplying device 10 supplies a low-pressure gas having a pressure adjusted in a range of about 9.81 to 490 KPa (0.1 to about 5 kg/cm$^2$), preferably about 9.81 to 294 KPa (0.1 to about 3 kg/cm$^2$). In this embodiment, use is made of a known nitrogen gas generating device (membrane gas generator) to which compressed air is supplied to separate and take out a nitrogen gas from the air by membrane separation. For example, as shown in Fig. 1, the gas supplying device 10 comprises the port 31 for receiving compressed air from a compressor, a filter 32, a membrane separation module 33, the pressure regulating valve 34 and a gas flowmeter 35.

The membrane separation module 33 separates gases in air by utilizing differences in membrane permeation velocity between the gases, thus generating a desired gas. The velocity at which a gas permeates a membrane depends on the solubility and diffusing ability of molecules of the gas with respect to the membrane. Nitrogen can be separated with high efficiency because, of the components of air, nitrogen has the lowest membrane permeation velocity. In the membrane separation module 33 in this embodiment, water and oxygen having high membrane permeation velocities are discharged to the outside of the membrane, and nitrogen having the lowest membrane permeation velocity is taken out as a gas. Generally, the pressure of the nitrogen gas outputted from the membrane separation module 33 is lower than that of the inputted compressed air by about 49 to 98.1 KPa (0.5 to about 1 kg/cm$^2$). As the membrane separation module 33, for example, UT Series (manufactured and sold by Taiyo Toyo Sanso Co., Ltd.) can be used.

When the membrane separation module 33 is used, a nitrogen gas can be continuously obtained by supplying compressed air to the membrane separation module 33. Further, the membrane separation module 33 has a simple construction and a low possibility of malfunctioning, leading to easy maintenance. The membrane separation module 33 has no drive, so that it is free from vibration and noise. The membrane separation module 33 is small and does not require a large space for installation. A gas having a low moisture content can be stably obtained. The membrane separation module 33 is operated with a low-pressure output, leading to high safety and low costs.

The high-viscosity material supplying device 11 supplies the high-viscosity material under a high pressure adjusted in a range of about 9810 to 29400 KPa (100 to about 300 kg/cm$^2$), preferably about 14700 to 24500 KPa (150 to about 250 kg/cm$^2$). In this embodiment, a plunger pump 42A of a follower plate type is used as a pump for pumping the high-viscosity material. In the plunger pump 42A, the high-viscosity material MV contained in a can is pressed by means of a plate driven by a cylinder device (not shown), to thereby transfer the high-viscosity material MV into the pipe 39A.

The gas introducing device 12 comprises two piston pumps 45A and 45B which are alternately operated. The piston pumps 45A and 45B include pistons reciprocally and linearly moved by motors M2A and M2B, respectively. Thus, the piston reciprocally moves within a cylinder in each piston pump, thereby effecting the suction stroke and the discharge stroke. The piston pumps 45A and 45B are provided between the pipe 39A and a pipe 44A. The high-viscosity material MV from the high-viscosity material supplying device 11 and the gas from the gas supplying device 10 are introduced separately from each other in a predetermined ratio into each of the piston pumps 45A and 45B in a batchwise manner.

Next, explanation is made of structures of the piston pumps 45A and 45B. The structure of the piston pump 45A is identical to that of the piston pump 45B. Therefore, only the piston pump 45A is described.

Referring to Figs. 1 and 3, the piston pump 45A comprises: a cylinder 451; a piston 452 which sealingly engages and slidably moves within the cylinder 451; and three needle valves NV1, NV3 and NV5 provided in the cylinder 451.

The needle valve NV5 is a valve for controlling discharge and is provided at a stroke end of the discharge stroke in the piston pump 45A. The needle valve NV3 is a valve for controlling supply of the gas and is provided in the vicinity of the stroke end of the discharge stroke. The needle valve NV1 is a valve for controlling supply of the high-viscosity material MV and is provided in the vicinity of a stroke end of the suction stroke in the piston pump 45A.

The needle valves NV1, NV3 and NV5 are substantially identical to each other in terms of structure. In each needle valve, a needle 453 is axially moved by a pneumatic cylinder so that the forward end of the needle 453 opens and closes an opening 454 formed on an inner circumferential surface or end surface of the cylinder 451. A valve body includes a port 455 communicating with a valve chamber.

When the needle valves NV1, NV3 and NV5 are closed, the forward end of the needle 453 of each needle valve is flush with the inner circumferential surface or end surface of the cylinder 451, so that the dead space between the needle 453 and the piston 452 is substantially zero. Therefore, when the needle valves NV1, NV3 and NV5 are closed, there is no possibility that a part of the gas or high-viscosity material supplied into the cylinder 451 will enter and remain in the valve chambers of the needle valves NV1, NV3 and NV5. When the needle valve NV5 opens to effect the discharge stroke, all the gas and the high-viscosity material in the cylinder 451 are discharged.

Check valves CV3 and CV4, and check valves CV5 and CV6 are provided in the pipe 39B and the pipe 44A, respectively. The volume (discharge volume) of the cylinder of each of the piston pumps 45A and 45B is determined from the diameter of the piston 452 and the stroke (the distance by which the piston moves) of the piston 452. In this embodiment, the diameter of the piston 452 is 16 mm, the stroke of the piston 452 is 125 mm and the volume of the piston 452 is 25 cc.

The control device 19 controls motors M1A, M2A and M2B and the needle valves NV1, NV3 and NV5 so as to supply the gas into the cylinder 451 of each of the piston pumps 45A and 45B during the suction stroke, supply the high-viscosity material MV into the cylinder 451 in a batchwise manner after the suction stroke and effect the discharge stroke after completion of the supply of the high-viscosity material MV in the cylinder, to thereby discharge the gas and high-viscosity material into the pipe 44A.

Next, an operation of the mixing/supplying device 5 is described.

Fig. 4 is a timing chart for explaining operations of the piston pumps 45A and 45B.

Compressed air is supplied into the port 31 shown in Fig. 1, and the gas is supplied into the pipe 39B under the pressure set by the pressure regulating valve 34. The motor M1A is controlled so that the high-viscosity material MV is supplied under the predetermined high pressure into the pipe 39A as desired, by means of the screw pump operated by the motor M1A.

As shown in Fig. 4, in either of the piston pumps 45A and 45B, the piston 452 moves from the discharge end to the suction end, to thereby effect the suction stroke. During the suction stroke, when the time T1 has passed after start of the movement of the piston, 452, the needle valve NV1 opens, to thereby supply the gas into the cylinder. The time T1 is a period of about 1 to about 2 seconds. During this period, the pressure in the cylinder 451 is negative.

After a short time after the piston 452 has reached the suction end, the needle valve NV1 closes. Therefore, at the time of completion of the suction stroke, the cylinder 451 is filled with the gas having the regulated pressure. The amount of gas suctioned into the cylinder 451 by a single suction stroke is measured by the gas flowmeter 35. When the amount of gas measured by the gas flowmeter 35 is less than a predetermined value, the control device 19 emits a warning signal. Thus, the supply amount of the gas during the suction stroke is monitored by the control device 19.

When the time T3 has passed after closing of the needle valve NV1, the needle valve NV3 opens. The time T3 is a period of about 0.1 to about 0.5 second. Thus, simultaneous opening of the needle valves NV1 and NV3 can be prevented. The needle valve NV3 is opened for the time period T4. During this period, the high-viscosity material MV is supplied from the high-viscosity material supplying device 11 into the cylinder 451. Due to high pressure of the high-viscosity material, the low-pressure gas, which has been supplied to the cylinder 451 before supplying the high-viscosity material, is compressed in a ratio equal to the pressure ratio of the gas to the high-viscosity material. Consequently, the volume of the gas becomes almost negligible.

For example, when the pressure of the gas is 98.1 KPa (1 kg/cm$^2$) and the pressure of the high-viscosity material is 19600 KPa (200 kg/cm$^2$), the volume of the gas becomes about 1/200. In this case, the high-viscosity material in an amount equal to the volume of the cylinder 451 is mixed with the gas of 98.1 KPa (1 kg/cm$^2$) in the same volume. It should be noted that the gas of 98.1 KPa (1 kg/cm$^2$) in a volume equal to the volume of the cylinder 451 is equivalent to the gas under atmospheric pressure (a pressure of 0 KPa (0 kg/cm$^2$)) in a volume twice that of the cylinder 451. That is, supplying the gas of 98.1 KPa (1 kg/cm$^2$) into the cylinder is equivalent to pressurizing the cylinder to + 98.1 KPa (+ 1 kg/cm$^2$), as the pressure in the cylinder is a negative pressure of about - 98.1 KPa (- 1 kg/cm$^2$) before supplying the gas during the suction stroke. Therefore, the mixing ratio R of the gas and the high-viscosity material when the volume of the gas is converted into that under atmospheric pressure is 2:1. The mixing ratio R is expressed by a general formula R = (P1 + 1):1 wherein P1 indicates the supply pressure of the gas. That is, the mixing ratio R can be easily adjusted or controlled by adjusting the supply pressure P1 of the gas.

When the gas is mixed with and dispersed into the high-viscosity material, the high-viscosity material is foamed upon discharge into the atmosphere in a volume 3 (= 1 + 2) times that of the cylinder. In other words, a foaming ratio A of the high-viscosity material is "3". The foaming ratio A is expressed by a general formula (P1 + 2) wherein P1 indicates the supply pressure of the gas.

When the time T5 has passed after closing of the needle valve NV3, the needle valve NV5 opens, and the piston 452 moves from the suction end to the discharge end, to thereby effect the discharge stroke. The time T5 is a period of about 0.1 to about 0.5 second. During the discharge stroke, the needle valves NV1 and NV3 are closed so that the forward end of the needle 453 of each of the needle valves NV1 and NV3 is flush with the inner circumferential surface of the cylinder 451. Therefore, the dead space is zero and all the gas and the high-viscosity material in the cylinder 451 are discharged from the opening 454 of the needle valve NV5. When the time T6 has passed after completion of the discharge stroke, the subsequent suction stroke is started. The time T6 is a period of about 0.1 to about 0.5 second.

With respect to the piston pumps 45A and 45B, after the discharge stroke of one piston pump is completed, the discharge stroke of the other piston pump is started. Consequently, the piston pump 45A and the piston pump 45B alternately discharge a gas-mixed material (or a combination of the high-viscosity material and the gas relatively discriminately combined therewith) into the pipe 44A. In the pipe 44A, the gas-mixed materials from the piston pump 45A and the piston pump 45B individually form two layers of the high-viscosity material and the compressed gas discharged by a single discharge stroke. Therefore, a series of two-layered materials are discontinuously arranged in the pipe 44A. When the volume of each of the piston pumps 45A and 45B is as small as about 25cc, the gas-mixed materials are arranged in a pulse-like manner in the pipe 44A. This enhances dispersion in a dispersion process after the discharge stroke.

Fig. 2 is a circuit diagram showing the pressurizing device 13, the dispersing device 14 and the discharging device 15. The pressurizing device 13, the dispersing device 14 and the discharging device 15 are provided after the mixing/supplying device 5. The mixing/supplying device 5 and the devices 13 to 15 as a whole provide the foaming apparatus 1.

Referring to Fig. 2, the pressurizing device 13 comprises: piston pumps 51A and 51B, each including a piston reciprocally and linearly driven by a motor to pressurize a fluid; valves 52A, 52B, 53A and 53B; and pressure sensors 55A and 55B. If desired, a mixer may be provided before and after the pressurizing device 13.

The gas-mixed materials discharged into the pipe 44A are pressurized by the piston pumps 51A and 51B which are alternately operated, and are transferred into a pipe 57.

For example, with respect to an operation of the piston pump 51A, when the piston moves upward within a cylinder while the valve 52A is opened and the valve 53A is closed, the gas-mixed material in the pipe 44A is suctioned into the cylinder. When the piston moves downward while the valve 52A is closed and the valve 53A is opened, the gas-mixed material in the cylinder is extruded in a pressurized state. The pressure in the cylinder is detected by the pressure sensor 55A, which supplies a detection signal to the control device 19. The extrusion pressure of the piston pump 51A is 14700 KPa (150 kg/cm$^2$) or more. The rotation speed of the motor for driving the piston is controlled in accordance with a signal from the control device 19, thus controlling suctioning and extrusion of the piston pump 51A and the discharge rate (the extrusion rate) of the gas-mixed material from the piston pump 51A.

The dispersing device 14 comprises a dispersing pipe 61 and a valve 65. The dispersing pipe 61 is a hose having an inner diameter of about 8 to about 10 mm and a length of about 2 to about 10 m. In the dispersing pipe 61, the pressure of the gas-mixed material is 14700 KPa (150 kg/cm$^2$) or more, for example, 19600 to 24500 KPa (200 to 250 kg/cm$^2$), and the discharge rate of the gas-mixed material is about 200 cc/min. During passing of the pressurized gas-mixed material through the dispersing pipe 61, the gas is dispersed into the high-viscosity material MV in the form of fine bubbles having an average diameter of about 0.01 mm.

The pressure in the dispersing pipe 61 and the inner diameter and length of the dispersing pipe 61 can be determined, based on the viscosity characteristics and specific gravity of the high-viscosity material MV and the necessary discharge amount of the high-viscosity material MV.

Gas dispersion in the dispersing pipe 61 is considered as follows. The gas which flows with the high-viscosity material MV in the dispersing pipe 61 has a specific gravity much smaller than that of the high-viscosity material MV and has low viscosity. Therefore, the gas moves toward a pipe wall at which the flow velocity is low, and is dispersed into the high-viscosity material MV due to shearing force generated between the pipe wall and the high-viscosity material MV. The gas is reduced in volume by pressurization. Therefore, the higher pressure is applied, the higher dispersing effect can be achieved. In other words, large bubbles first move toward the pipe wall and are sheared by the shearing force, so that they are formed into small bubbles. Extremely fine bubbles mixed into the high-viscosity material MV move away from the pipe wall and return toward the center of the pipe, because there are only small differences in specific gravity and viscosity between these bubbles and the high-viscosity material MV. When the pressure in the pipe lowers, the bubbles grow to have a large volume and move to the pipe wall, where the bubbles are sheared again. This phenomenon is repeated, thus shearing the bubbles to disperse the gas into the high-viscosity material MV.

The discharging device 15 is adapted to discharge the mixture of the high-viscosity material and the gas dispersively mixed therewith from the dispersing device 14 under normal pressure, to thereby effect foaming. The discharging device 15 comprises a discharging pipe 71, a discharge valve 72 and a nozzle 73.

When the valve 72 is opened, the mixture from the dispersing device 14, which comprises the high-viscosity material MV and the gas, is discharged from the nozzle 73. Upon discharge, the gas expands to thereby foam the high-viscosity material. The foamed high-viscosity material MV is applied or formed in a predetermined shape by moving the nozzle 73 on a predetermined trajectory.

The control device 19 effects overall control of the foaming apparatus 1. The control device 19 performs on-line control of a series of operations for discharging the high-viscosity material MV so that the foaming ratio A becomes a predetermined value. The foaming ratio A is defined in accordance with the following formula:

$$\text{foaming ratio } A = V_1/V_0,$$

wherein $V_1$: volume per unit mass of the high-viscosity material after foaming (under atmospheric pressure); and

$V_0$: volume per unit mass of the high-viscosity material before foaming.

In the foaming apparatus 1, the foaming ratio A can be set to a value in a range of, for example, about 1 to about 4. In the case of producing a foamed-in-place gasket, the foaming ratio A is generally set to an appropriate value in a range of 2 to 4.

By use of the above-mentioned mixing/supplying device 5, it has become possible to mix the high-viscosity material MV and the gas in the mixing ratio R accurately by means of a simple device. Therefore, in the foaming apparatus 1, the foaming ratio A can be controlled with high precision. Especially, since use is made of the piston pumps 45A and 45B in which the dead space becomes substantially zero and is negligible, an accurate volume can be measured, so that the mixing ratio R can be obtained accurately. In the conventional technique in which the mixing ratio R is controlled by measuring the gas pressure, since it is difficult to measure the flow rate with high precision, the control cannot be easily effected, leading to low accuracy of the mixing ratio R.

Further, since the gas having a pressure as low as about atmospheric pressure can be mixed into the high-viscosity material MV, a gas supplying device of a low-pressure output type using the membrane separation module 33 can be used as the gas supplying device 10. Therefore, it is unnecessary to use a gas cylinder filled with a high-pressure gas, so that there is no need for maintenance such as replacement of the gas cylinder and no large space is required. Further, the gas flow rate can be measured accurately by the gas flowmeter 35 and the operations of the piston pumps 45A and 45B can be monitored with high precision.

In the above-mentioned embodiment, the membrane separation module 33 is used as the gas supplying device 10. However, for example, a gas cylinder filled with a high-pressure gas and a pressure regulating valve may be used.

In the above-mentioned embodiment, the two piston pumps 45A and 45B are used. Therefore, the discharge amount can be increased and continuous fixed-quantity discharge can be performed. Instead of two piston pumps, three or more piston pumps may be used. Preferably, a plurality of such piston pumps are operated alternately or with a time difference. When two piston pumps are used, continuous discharge can be performed by making the operation speed for the suction stroke higher than the reverse operation speed for the discharge stroke.

In the above-mentioned embodiment, a premixer having blades may be provided in the pipe 44A of the pressurizing device 13.

In the above-mentioned embodiment, the gas in the combination can be formed into fine bubbles by flowing the combination through the dispersing pipe 61 in a pressurized state. Therefore, dispersion can be effected efficiently. A hose having an appropriate inner diameter and an appropriate length can be used as the dispersing pipe 61, leading to easy maintenance and low costs.

Further, for example, when the discharging device 15 is connected to a robot so as to be moved by a manipulator on a predetermined trajectory, it is necessary to connect the pressurizing device 13 and the discharging device 15 by using a pipe or a hose. In this case, by using a pipe or hose having an appropriate length as the dispersing pipe 61, the dispersing pipe 61 can be used for connection between the pressurizing device 13 and the discharging device 15. The dispersing pipe 61 can be used together with a conventional mixer such as a power mixer or a static mixer. Such a conventional mixer may be provided to be used in either of the first, second, third and fourth steps in the present invention.

Further, as the dispersing pipe 61, a unit (a dispersing pipe unit) comprising a spirally wound pipe having an appropriate inner diameter and an appropriate length may be used. In this case, the pipe may be made of, for example, steel. With respect to the size of the pipe, for example, a pipe having a nominal bore of 3/8 and a length of about 10 to 5 m or a pipe having a nominal bore of 1/4 and a length of about 10 to 2 m may be used.

In the above-mentioned embodiment, a pressure regulating valve may be provided after the dispersing pipe 61, or before and after the dispersing pipe 61, so as to regulate the pressure at the pressure regulating valve to maintain the high-viscosity material MV in the dispersing pipe 61 under high pressure. In this case, the pressure regulating valve before the dispersing pipe 61 is set to 14700 to 34300 KPa (150 to 350 kg/cm$^2$) or more and the pressure regulating value after the dispersing pipe 61 is set to about 4900 to 24500 KPa (50 to 250 kg/cm$^2$).

It is to be understood that, within the scope of the present invention, parts, entire arrangements, shapes, dimensions, materials, numerical quantities, volumes, operation timings of the gas supplying device 10, the mixing/supplying device 5 or the foaming apparatus 1 can be modified otherwise than as specifically described above.

Various features of the present invention are described in the appended claims.

INDUSTRIAL APPLICABILITY

In the present invention, a gas can be mixed into a high-viscosity material under low pressure in an accurate mixing ratio.

Further, the present invention provides a piston pump by use of which a gas and a high-viscosity material can be mixed in an accurate mixing ratio and which has a simple construction with low costs.

Further, in the present invention, a gas can be introduced into a high-viscosity material under low pressure in a batchwise manner, leading to easy maintenance, high safety and low costs. In addition, the gas and the high-viscosity material can be mixed in an accurate mixing ratio, so that the foaming ratio of the high-viscosity material can be easily controlled.

**Claims**

1. A method for mixing a high-viscosity material into a gas by using a piston pump (45A) comprising a piston (452) and a cylinder (451), the piston being adapted to reciprocally move within the cylinder to effect a suction stroke and a discharge stroke,
   the method comprising the steps of:

   supplying a gas into the cylinder (451) during and/or after the suction stroke of the piston pump;
   supplying a high-viscosity material into the cylinder (451) after the suction stroke; and
   effecting the discharge stroke of the piston pump after completion of the supply of the high-viscosity material in the cylinder, to thereby discharge the gas and the high-viscosity material into a dispersion pipe (61),

   **characterised in that** a membrane gas generator (33,34,35) is provided to which compressed air is supplied to generate the gas, the gas being supplied into the piston pump (45A) prior to supplying the high-viscosity material into the piston pump.

2. A method according to claim 1, wherein the membrane gas generator generates a low-pressure gas which is supplied into the piston pump (45A) prior to supplying the high-viscosity material into the piston pump.

3. A method according to claim 1 or 2, further comprising:

   mixing the gas and the material by the dispersion pipe (61) to produce a mixture; and
   discharging the mixture to provide a high-viscosity foamed material.

4. A method according to claim 3, wherein a dead space within the cylinder (451) becomes substantially zero at the condition of completion of the discharge stroke of the piston pump.

5. A method according to claim 4, wherein the combination of the high-viscosity material and the gas are pressurized before passing the combination in a pressurized state through the dispersing pipe (61), to thereby disperse the gas into the high-viscosity material to produce a mixture and further including the step of discharging the mixture which has been passed through the dispersing pipe (61) to thereby effect foaming.

6. A method according to claim 5, wherein a mixing ratio of the gas and the high-viscosity material is controlled, based on a supply pressure ratio of the gas to the high-viscosity material supplied into the cylinder of the piston pump.

7. A method according to claim 6, wherein a mixing ratio of the gas and the high-viscosity material is controlled by means of a gas pressure and an amount of the gas supplied into the cylinder of the piston pump.

8. The method according to any of claims 1 to 7, wherein the supply of the gas into the cylinder (451) is made under a first pressure, wherein the supply of the high-viscosity material into the cylinder (451) is made under a second pressure, and wherein the second pressure is higher than the first pressure.

9. The method according to claim 8, wherein the first pressure is 9.81 to 490 KPa (0.1 to 5 kg/cm$^2$).

10. The method according to claim 9, wherein the second pressure is 9810 to 29400 KPa (100 to 300 kg/cm$^2$).

11. The method according to any of claims 8 to 10, wherein the first pressure is 9.81 to 294 KPa (0-1 to 3 kg/cm$^2$).

12. The method according to any of claims 8, 9 and 11, wherein the second pressure is 14700 to 24500 KPa (150 to 250 kg/cm$^2$) .

13. A method according to any of claims 1 to 12, wherein a nitrogen gas is generated by the membrane gas generator and the generated nitrogen gas is used as the gas.

14. A method according to any of claims 1 to 4, wherein the gas is air.

15. An apparatus for providing a high-viscosity foamed material, comprising:

a piston pump (45A) including a piston (452) and a cylinder (451);
a device (10) for supplying a gas to the cylinder;
a device (11) for supplying a high-viscosity material into the gas within the cylinder after the device (10) has finished supplying the gas to the cylinder;
a device (13,14) for mixing the gas and the material placed in a discharge pipe (44A) of the piston pump (45A) to produce a mixture; and
a device (15) for discharging the mixture to provide a high-viscosity, foamed material, **characterised in that** the apparatus further comprises a membrane gas generator (33,34,35) to which compressed air can be supplied to generate a gas; and

a pump (42A) for pumping a high-viscosity material; wherein,
the piston pump (45A) is adapted to discharge a combination of the high-viscosity material pumped from the pump (42A) and the gas supplied from the membrane gas generator; and a pressurizing pump (51A) is provided for pressurizing the combination of the high-viscosity material and the gas discharged from the piston pump, and
a dispersing pipe (61) is provided for passing the combination in a pressurized state therethrough to disperse the gas into the high-viscosity material to produce a mixture.

16. An apparatus according to claim 15, wherein the device for mixing (14) is for mixing the gas and material to produce a mixture by spreading the gas into the high-viscosity material.

17. The apparatus according to claim 15 or claim 16, wherein said gas supplying device (10) and said high-viscosity material supplying device (11) comprise valves controlling the supply of gas and high-viscosity material to said cylinder.

18. An apparatus according to any of claims 15 to 17, wherein;
the piston (452) is adapted to reciprocally move within the cylinder (451) to effect a suction stroke and a discharge stroke; the gas supplying device (10) is for supplying a gas into the cylinder under a predetermined pressure;
the high-viscosity material supplying device (11) is for supplying a high-viscosity material into the cylinder under a predetermined pressure; and wherein there is also provided,
a control device (19) for effecting control of the devices for supplying, mixing and discharging (10,11,12,13, 14, 15) .

19. An apparatus according to claim 18, wherein first, second and third needle valves are provided in the cylinder of the piston pump, the second needle valve (NV3) being provided at a stroke end of the discharge stroke and adapted to control supply of the gas, the third needle valve (NV1) being provided at a stroke end of the suction stroke and adapted to control supply of the high-viscosity material, the first needle valve (NV5) being provided at a stroke end of the discharge stroke and adapted to control discharge of the gas and the high-viscosity material and wherein a dead space within the cylinder becomes substantially zero at the condition of the completion of the discharge stroke of the piston pump (45A).

20. An apparatus according to claim 15, wherein the dispersing pipe (61) is a tubular conduit.

21. An apparatus according to any of claims 15 to 20, wherein the gas supplying device is adapted to introduce gas into the piston pump at a pressure of 9.81 to 490 KPa (0.1 to 5 kg/cm$^2$).

22. An apparatus according to any of claims 15 to 19, wherein the gas is air.

**Patentansprüche**

1. Verfahren zum Mischen eines hochviskosen Materials in ein Gas unter Verwendung einer Kolbenpumpe (45A), die einen Kolben (452) und einen Zylinder (451) aufweist, wobei der Kolben dazu ausgebildet ist, sich innerhalb des Zylinders hin- und herzubewegen, um einen Saughub und einen Auslasshub zu bewirken,
wobei das Verfahren folgende Schritte aufweist:

   Zuführen eines Gases in den Zylinder (451) während des Saughubs und/oder nach dem Saughub der Kolbenpumpe;

   Zuführen eines hochviskosen Materials in den Zylinder (451) nach dem Saughub; und

   Durchführung des Auslasshubes der Kolbenpumpe nach Beendigung der Zufuhr des hochviskosen Materials in den Zylinder, um hierdurch das Gas und das hochviskose Material in ein Dispergierrohr (61) auszustoßen,

   **dadurch gekennzeichnet, dass** ein Membrangasgenerator (33, 34, 35) vorgesehen ist, welchem Druckluft zugeführt wird, um das Gas zu erzeugen, wobei das Gas in die Kolbenpumpe (45A) zugeführt wird, bevor das hochviskose Material in die Kolbenpumpe zugeführt wird.

2. Verfahren nach Anspruch 1, bei welchem der Membrangasgenerator ein Niederdruckgas erzeugt, das in die Kolbenpumpe (45A) vor dem Zuführen des hochviskosen Materials in die Kolbenpumpe zugeführt wird.

3. Verfahren nach Anspruch 1 oder 2, bei welchem weiterhin vorgesehen sind:

   Mischen des Gases und des Materials durch das Dispergierrohr (61) zur Erzeugung einer Mischung; und

   Ausstoßen der Mischung zur Bereitstellung eines geschäumten, hochviskosen Materials.

4. Verfahren nach Anspruch 3, bei welchem ein Totraum innerhalb des Zylinders (451) im Wesentlichen zu Null in dem Zustand der Beendigung des Auslasshubes der Kolbenpumpe wird.

5. Verfahren nach Anspruch 1, bei welchem die Kombination aus dem hochviskosen Material und dem Gas unter Druck gesetzt wird, bevor die Kombination im druckbeaufschlagten Zustand durch das Dispergierrohr (61) hindurchgeleitet wird, um hierdurch das Gas in dem hochviskosen Material zu dispergieren, um eine Mischung zu erzeugen, und weiterhin der Schritt vorgesehen ist, die Mischung auszustoßen, die durch das Dispergierrohr (61) hindurchgeführt wurde, um hierdurch ein Schäumen zu bewirken.

6. Verfahren nach Anspruch 5, bei welchem ein Mischungsverhältnis des Gases und des hochviskosen Materials gesteuert wird, auf Grundlage eines Zufuhrdruckverhältnisses des Gases zum hochviskosen Material, das in den Zylinder der Kolbenpumpe eingegeben wird.

7. Verfahren nach Anspruch 6, bei welchem ein Mischungsverhältnis des Gases und des hochviskosen Materials mithilfe eines Gasdruckes und einer Gasmenge gesteuert wird, die in den Zylinder der Kolbenpumpe zugeführt wird.

8. Verfahren nach einem der Ansprüche 1 bis 7, bei welchem die Zufuhr des Gases in den Zylinder (451) unter einem ersten Druck durchgeführt wird, und die Zufuhr des hochviskosen Materials in den Zylinder (451) unter einem zweiten Druck durchgeführt wird, wobei der zweite Druck höher ist als der erste Druck.

9. Verfahren nach Anspruch 6, bei welchem der erste Druck 9,81 bis 490 kPa (0,1 bis 5 kg/cm$^2$) beträgt.

10. Verfahren nach Anspruch 9, bei welchem der zweite Druck 9810 bis 29400 kPa (100 bis 300 kg/cm$^2$) beträgt.

11. Verfahren nach einem der Ansprüche 8 bis 10, bei welchem der erste Druck 9,81 bis 294 kPa (0,1 bis 3 kg/cm$^2$) beträgt.

12. Verfahren nach einem der Ansprüche 8, 9 und 11, bei welchem der zweite Druck 14700 bis 24500 kPa (150 bis 250 kg/cm$^2$) beträgt.

13. Verfahren nach einem der Ansprüche 1 bis 12, bei welchem ein Stickstoffgas von dem Membrangasgenerator erzeugt wird, und das erzeugte Stickstoffgas als das Gas eingesetzt wird.

**14.** Verfahren nach einem der Ansprüche 1 bis 4, bei welchem das Gas Luft ist.

**15.** Einrichtung zur Bereitstellung eines hochviskosen, geschäumten Materials, wobei vorgesehen sind:

eine Kolbenpumpe (45A), die einen Kolben (452) und einen Zylinder (451) aufweist;

eine Vorrichtung (10) zum Zuführen eines Gases zum Zylinder;

eine Vorrichtung (11) zum Zuführen eines hochviskosen Materials in das Gas innerhalb des Zylinders, nachdem die Vorrichtung (10) das Zuführen des Gases zum Zylinder beendet hat;

eine Vorrichtung (13, 14) zur Mischung des Gases und des Materials, das in einem Auslassrohr (44A) der Kolbenpumpe (45A) angeordnet ist, um eine Mischung zu erzeugen; und

eine Vorrichtung (15) zum Ausstoßen der Mischung zur Bereitstellung eines hochviskosen, geschäumten Materials, **dadurch gekennzeichnet, dass** die Einrichtung weiterhin einen Membrangasgenerator (33, 34, 35) aufweist, welchem Druckluft zugeführt werden kann, um ein Gas zu erzeugen; und

eine Pumpe (42A) zum Pumpen eines hochviskosen Materials; wobei

die Kolbenpumpe (45A) dazu ausgebildet ist, eine Kombination aus dem hochviskosen Material, das von der Pumpe (42A) gepumpt wird, und dem Gas, das von dem Membrangasgenerator geliefert wird, auszustoßen; und eine Druckbeaufschlagungspumpe (51) vorgesehen ist um die Kombination aus dem hochviskosen Material und dem Gas, die aus der Kolbenpumpe ausgestoßen wird, mit Druck zu beaufschlagen, und

ein Dispergierrohr (61) vorgesehen ist, um die Kombination in einem druckbeaufschlagten Zustand durch es hindurchzuleiten, um das Gas in das hochviskose Material zu dispergieren, um eine Mischung zu erzeugen.

**16.** Einrichtung nach Anspruch 15, bei welchem die Vorrichtung (14) zum Mischen dazu dient, das Gas und das Material zu mischen, um eine Mischung zu erzeugen, durch Ausbreiten des Gases in das hochviskose Material.

**17.** Einrichtung nach Anspruch 15 oder 16, bei welcher die Gaszufuhrvorrichtung (10) und die Zufuhrvorrichtung (11) für das hochviskose Material Ventile aufweisen, welche die Zufuhr von Gas und hochviskosem Material zu dem Zylinder steuern.

**18.** Einrichtung nach einem der Ansprüche 15 bis 17, bei welcher
der Kolben (452) dazu ausgebildet ist, sich innerhalb des Zylinders (451) hin- und herzubewegen, um einen Saughub und einen Auslasshub zu bewirken;
die Gaszufuhrvorrichtung (10) zum Zuführen eines Gases in den Zylinder unter einem vorbestimmten Druck dient;
die Zufuhrvorrichtung (11) für das hochviskose Material zum Zuführen eines hochviskosen Materials in den Zylinder unter einem vorbestimmten Druck dient; und wobei weiterhin vorgesehen ist,
eine Steuervorrichtung (19) zur Bewirkung einer Steuerung der Vorrichtungen zum Zuführen, Mischen und Ausstoßen (10, 11, 12, 13, 14, 15).

**19.** Einrichtung nach Anspruch 18, bei welcher ein erstes, ein zweites und ein drittes Nadelventil in dem Zylinder der Kolbenpumpe vorgesehen sind, wobei das zweite Nadelventil (NV3) an einem Hubende des Auslasshubes vorgesehen ist, und dazu ausgebildet ist, die Zufuhr des Gases zu steuern, das dritte Nadelventil (NV1) an einem Hubende des saughubes vorgesehen ist, und dazu ausgebildet ist, die Zufuhr des hochviskosen Materials zu steuern, das erste Nadelventil (NV5) an einem Hubende des Auslasshubes vorgesehen ist, und dazu ausgebildet ist, den Ausstoß des Gases und des hochviskosen Materials zu steuern, und wobei ein Totraum innerhalb des Zylinders im Wesentlichen zu Null im Zustand der Beendigung des Auslasshubes der Kolbenpumpe (45A) wird.

**20.** Einrichtung nach Anspruch 15, bei welcher das Dispergierrohr (61) eine rohrförmige Leitung ist.

**21.** Einrichtung nach einem der Ansprüche 15 bis 20, bei welcher die Gaszufuhrvorrichtung dazu ausgebildet ist, Gas in die Kolbenpumpe auf einem Druck von 9,81 bis 490 kPa (0,1 bis 5 kg/cm$^2$) einzulassen.

**22.** Einrichtung nach einem der Ansprüche 15 bis 19, bei welcher das Gas Luft ist.

**Revendications**

**1.** Procédé pour incorporer un matériau à viscosité élevée dans un gaz en utilisant une pompe à piston (45A) comprenant un piston (452) et un cylindre (451), le piston étant apte à se déplacer selon un mouvement de va-et-vient dans le cylindre pour effectuer une course d'aspiration et une course d'évacuation,

le procédé comprenant les étapes consistant à:

amener un gaz dans le cylindre (451) pendant et/ou après la course d'aspiration de la pompe à piston;

amener un matériau hautement visqueux dans le cylindre (451) après la course d'aspiration; et effectuer la course d'évacuation de la pompe à piston après l'achèvement de l'amenée du matériau hautement visqueux dans le cylindre pour évacuer ainsi le gaz et le matériau hautement visqueux dans un tuyau de dispersion (61),

**caractérisé en ce qu'**un générateur de gaz à membrane (33, 34, 35) est prévu auquel l'air comprimé est amené pour produire le gaz, le gaz étant amené dans la pompe à piston (45A) avant d'amener le matériau hautement visqueux dans la pompe à piston.

2. Procédé selon la revendication 1, où le générateur de gaz à membrane produit un gaz basse pression qui est amené dans la pompe à piston (45A) avant d'amener le matériau hautement visqueux dans la pompe à piston.

3. Procédé selon la revendication 1 ou 2, comprenant en outre:

le mélange du gaz et du matériau par le tuyau de dispersion (61) pour produire un mélange; et l'évacuation du mélange pour réaliser un matériau mousse hautement visqueux.

4. Procédé selon la revendication 3, où un espace mort dans le cylindre (451) est réduit sensiblement à zéro lors de l'état d'achèvement de la course d'évacuation de la pompe à piston.

5. Procédé selon la revendication 4, où la combinaison du matériau hautement visqueux et du gaz est mise en pression avant de faire passer la combinaison à l'état comprimé à travers le tuyau de dispersion (61) afin de disperser ainsi le gaz dans le matériau hautement visqueux pour produire un mélange, et comprenant en outre l'étape consistant à évacuer le mélange qui a été amené à passer à travers le tuyau de dispersion (61) pour produire ainsi un moussage.

6. Procédé selon la revendication 5, où un rapport de mélange du gaz et du matériau hautement visqueux est commandé sur la base d'un rapport de pression d'amenée du gaz au matériau hautement visqueux amené dans le cylindre de la pompe à piston.

7. Procédé selon la revendication 6, où un rapport de mélange du gaz et du matériau hautement visqueux est commandé au moyen d'une pression de gaz et d'une quantité de gaz amenée dans le cylindre de la pompe à piston.

8. Procédé selon l'une des revendications 1 à 7, où l'amenée du gaz dans le cylindre (451) est effectué sous une première pression, où l'amenée du matériau hautement visqueux dans le cylindre (451) est réalisée sous une seconde pression, et où la seconde pression est plus élevée que la première pression.

9. Procédé selon la revendication 8, où la première pression est de 9,81 à 490 KPa (0,1 à 5 kg/cm$^2$).

10. Procédé selon la revendication 9, où la seconde pression est de 9810 à 29400 KPa (100 à 300 kg/cm$^2$).

11. Procédé selon l'une des revendications 8 à 10, où la première pression est de 9,81 à 294 KPa (0,1 à 3 kg/cm$^2$).

12. Procédé selon l'une des revendications 8, 9 et 11, où la seconde pression est de 14 700 à 24 500 Kpa (150 à 250 kg/cm$^2$).

13. Procédé selon l'une des revendications 1 à 12, où un gaz d'azote est produit par le générateur de gaz à membrane, et le gaz d'azote produit est utilisé comme gaz.

14. Procédé selon l'une des revendications 1 à 4, où le gaz est de l'air.

15. Appareil pour réaliser un matériau mousse hautement visqueux, comprenant:

une pompe à piston (45A) comprenant un piston (452) et un cylindre (451); un dispositif (10) pour amener un gaz dans le cylindre; un dispositif (11) pour amener un matériau hautement visqueux dans le gaz dans le cylindre après que le dispositif (10) a fini d'amener le gaz dans le cylindre; un dispositif (13, 14) pour mélanger le gaz et le matériau placé dans un tuyau d'évacuation (44A) de la pompe à piston (45A) pour produire un mélange; et un dispositif (15) pour évacuer le mélange afin de produire un matériau mousse hautement visqueux, **caractérisé en ce que** l'appareil comprend en outre un générateur de gaz à membrane (33, 34, 35) auquel de l'air comprimé peut être amené pour produire un gaz; et une pompe (42A) pour pomper un matériau hautement visqueux;

   dans lequel

la pompe à piston (45A) est apte à évacuer une combinaison d'un matériau hautement visqueux pompé par la pompe (42A) et du gaz fourni par le générateur de gaz à membrane; et une pompe de mise en pression (51A) est prévue pour mettre en pression la combinaison du matériau hautement visqueux et du gaz évacué par la pompe à piston, et

un tuyau de dispersion (61) est prévu pour faire passer la combinaison à l'état sous pression à travers celui-ci afin de disperser le gaz dans le matériau hautement visqueux pour produire un mélange.

**16.** Appareil selon la revendication 15, où le dispositif de mélange (14) est prévu pour mélanger le gaz et le matériau afin de produire un mélange en dispersant le gaz dans le matériau hautement visqueux.

**17.** Appareil selon la revendication 15 ou la revendication 16, où ledit dispositif d'amenée de gaz (10) et ledit dispositif d'amenée de matériau hautement visqueux (11) comprennent des vannes réglant l'amenée du gaz et du matériau hautement visqueux audit cylindre.

**18.** Appareil selon l'une des revendications 15 à 17, dans lequel:

le piston (452) est apte à effectuer un mouvement de va-et-vient dans le cylindre (451) pour effectuer une course d'aspiration et une course d'évacuation;
le dispositif d'amenée de gaz (10) est destiné à amener un gaz dans le cylindre sous une pression prédéterminée;
le dispositif d'amenée (11) du matériau hautement visqueux est destiné à amener un matériau hautement visqueux dans le cylindre sous une pression prédéterminée; et dans lequel est également prévu
un dispositif de commande (19) pour effectuer la commande des dispositifs d'amenée, de mélange, et d'évacuation (10, 11, 12, 13, 14, 15).

**19.** Appareil selon la revendication 18, où des première, seconde et troisième vannes à pointeau sont prévues dans le cylindre de la pompe à piston, la deuxième vanne à pointeau d'eau (NV3) étant prévue à l'extrémité de la course d'évacuation et étant apte à régler l'amenée du gaz, la troisième vanne à pointeau (NV1) étant prévue à une extrémité de la course d'aspiration et étant apte à régler l'amenée du matériau hautement visqueux, la première vanne à pointeau (NV5) étant prévue à une extrémité de la course d'évacuation et étant apte à commander l'évacuation du gaz et du matériau hautement visqueux, et où un espace mort dans le cylindre est réduit sensiblement à zéro lors de l'état d'achèvement de la course d'évacuation de la pompe à piston (45A).

**20.** Appareil selon la revendication 15, où le tuyau de dispersion (61) est un conduit tubulaire.

**21.** Appareil selon l'une des revendications 15 à 20, où le dispositif d'amenée de gaz est apte à introduire un gaz dans la pompe à piston à une pression de 9,81 à 490 KPa (0, 1 à 5 kg/cm$^2$) .

**22.** Appareil selon l'une des revendications 15 à 19, où le gaz est de l'air.

Fig. 1

5 mixing/supplying device
( 1 foaming apparatus)

control device

EP 0 974 391 B1

Fig. 2

# Fig. 3

# Fig. 4

Fig.5